# EUROPEAN PATENT APPLICATION

(11) **EP 2 570 592 A2**
(43) Date of publication of application: **20.03.2013**
(21) Application number: 12175101.0
(22) Date of filing: 05.07.2012
(51) Int. Cl.: F01D 5/08, F01D 25/08, F01D 25/12, F02C 3/30, F02C 3/34

(54) **Method and apparatus for controlling temperature of gas turbine components**

(30) Priority: 13.09.2011 US 201113230983
(71) Applicant: General Electric Company, Schenectady, NY 12345 (US)
(72) Inventor: Anand, Ashok Kumar, Schenectady, NY New York 12309 (US); Itzel, Gary Michael, Greennville, SC South Carolina 29615 (US); Lacy, Benjamin Paul, Greenville, SC South Carolina 29615 (US); Mulhaiah, Veerappan, 560066 Bangalore, Karnaytaka (IN); Reddy, Nagarjuna Reddy Thirumaia, 560066 Bangalore, Karnataka (IN)
(74) Representative: Cleary, Fidelma

(57) **Abstract**

A method and apparatus for controlling a temperature of a component of a gas turbine (100) is disclosed. A compressed gas for use as a coolant is provided. The coolant is moisturized at a moisturizeing unit (204). A circulating unit (214) circulates the moisturized coolant to the component of the gas turbine (100) to control the temperature of the component. The coolant can be air, nitrogen, and a mixture of air and nitrogen in various embodiments. The component of the turbine can be a blade (136) of a turbine section (210) of the gas turbine (100), a turbine nozzle and a combustor (208), for example. A combustor can combust a mixture of fuel and the moisturized compressed coolant gas to reduce a NOx emission of the gas turbine.

## Description

### BACKGROUND OF THE INVENTION

The subject matter disclosed herein relates generally to integrated gasification combined-cycle (IGCC) power generation systems, and more specifically to methods and apparatus for cooling gas turbine engine components in IGCC systems.

Known IGCC systems typically include a gas turbine that produces power. Compressed air and fuel are mixed in a combustion chamber and combustion occurs directing a working gas in a selected direction. The resulting working gas from the combustion is directed toward turbine blades and causes their rotation. In turn,, the rotation of the blades is used to generate electricity. Gas turbines generally operate at high temperatures. At these high temperatures, exhaust gas tends to contain large amounts of NOx gases that are subject to government regulation. In addition, efficiency of the gas turbine can be increased by reducing operating temperatures. Therefore, cooling components of the gas turbine is an important part of its operation. The present disclosure provides a method and apparatus for cooling gas turbine components.

### BRIEF DESCRIPTION OF THE INVENTION

According to one aspect of the invention, a method of controlling a temperature of a component of a gas turbine is provided, the method including: obtaining a compressed gas for use as a coolant; moisturizing the coolant; and circulating the moisturized coolant to the component of the gas turbine to control the temperature of the component.

According to another aspect of the invention, an apparatus for controlling a temperature of a component of a gas turbine is disclosed, the apparatus including: a unit configured to provide a compressed gas for use as a coolant; a moisturizer configured to add moisture to the coolant; and a circulating unit configured to circulate the moisturized coolant to the component of the gas turbine to control the temperature of the component.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 shows an exemplary gas turbine system of a power plant;
FIG. 2 shows an exemplary coolant preparation unit for providing the exemplary coolant of the present disclosure for circulation to various components of the exemplary gas turbine system of FIG. 1;
FIG. 3 shows an exemplary heat exchanger suitable for exchanging heat between a coolant and a gas obtained from a section of the exemplary gas turbine system of FIG. 1;
FIG. 4 shows a detailed view of an exemplary combustor section of a gas turbine system in one embodiment of the present disclosure;
FIG. 5 shows a detailed view of a combustor section having an alternate apparatus for cooling the combustor section;
FIG. 6 shows a graph of gas turbine performance for various exemplary parameters of an exemplary gas turbine system; and
FIG. 7 shows a performance of an exemplary gas turbine system cooled using coolant having various levels of moisture content.

The detailed description explains embodiments of the invention, together with advantages and features, by way of example with reference to the drawings.

### DETAILED DESCRIPTION OF THE INVENTION

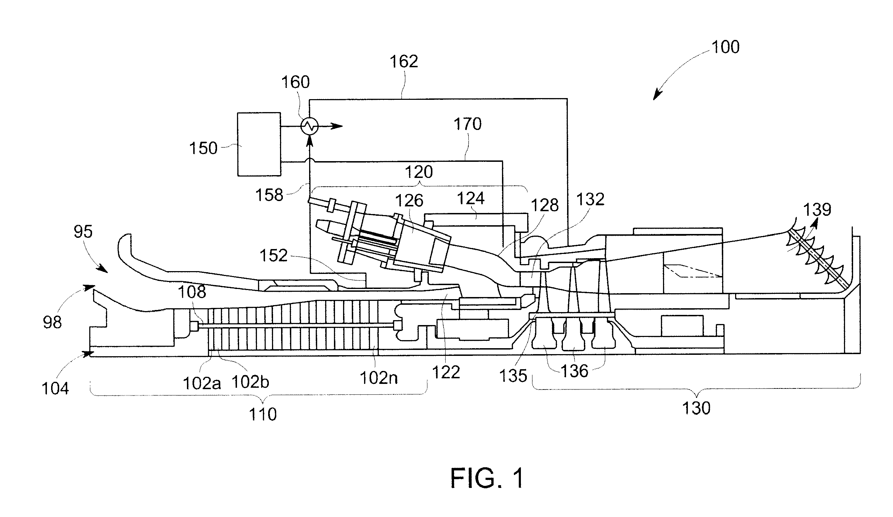

FIG. 1 shows an exemplary gas turbine system 100 of a power plant. Generally, the gas turbine system 100 includes a compressor section 110, a combustion section 120 and a turbine section 130. The compressor section 110 includes a plurality of compressor stages 102a ... 102n. An exemplary compressor stage includes stationary vanes supported by an outer housing 104 of the compressor section 110 and rotating blades which are mounted on a common shaft 108. Ambient air 95 is introduced through inlet 98 and successively compressed at each compressor stage by rotation of the blades. After being compressed at the final compression stage (102n), the compressed air travels through annular diffuser 122 to a compressed air chamber 124 which surrounds a combustion chamber 126 and transition member 128 of the combustion section 120. Fuel is mixed with the compressed air in the combustion chamber 126 and the air/fuel mixture is burned in the combustion chamber 126 to create a working gas which is directed through the transition member 128 to a turbine nozzle 132 to the first stage of the turbine section 130. The turbine section 130 is made up of a serial arrangement of stages, each stage having rotating blades 136. The rotating blades are supported by a common rotor system 135. The working gas exiting the transition member 128 expands through the serial stages to cause rotation of the blades. The rotation of the blades in turn imparts rotation to the rotor system 135. In one aspect, the turbine rotor system 135 can be connected to the compressor shaft 108 so that rotation of the turbine rotor system 135 drives the blades of the compressor section 110. In power plant applications, the rotor system 135 is coupled to a rotor of a generator to drive the generator to create electricity. The working gas ultimately is exhausted at the exit 139 of the turbine section 130 and can be directed through an exhaust stack to the ambient atmosphere, to a cooling unit or to a heat exchanger.

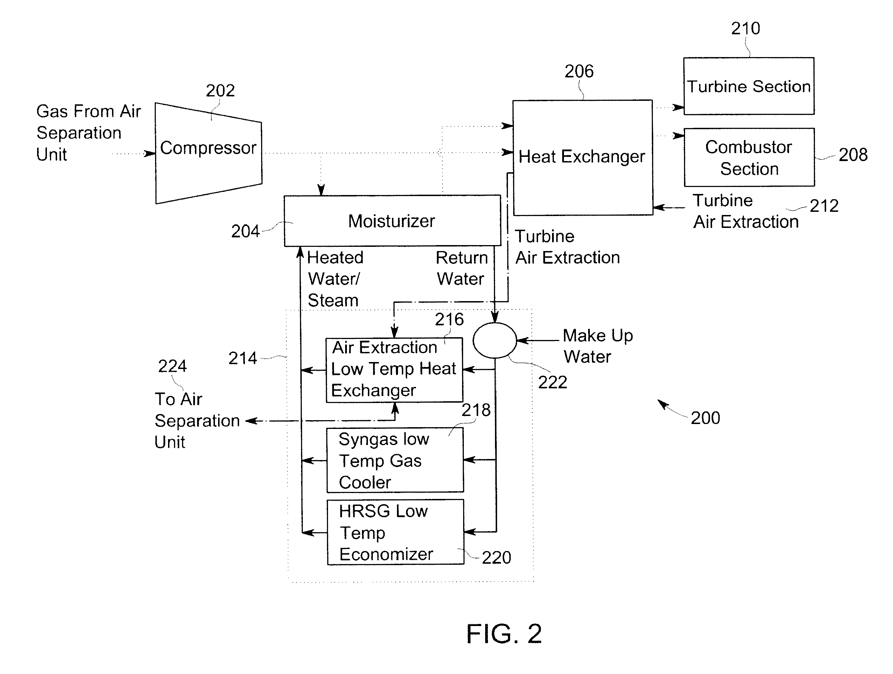

In an exemplary embodiment, the gas turbine system 100 includes a cooling unit 150 providing coolant to various components of the gas turbine system, typically at the combustion section 120 and the turbine section 130. Exemplary conduit 170 delivers the coolant to the compressed air chamber 124. Coolant in the compressed air chamber 124 is circulated to a selected component of the gas turbine system, generally at the combustion chamber 126 and/or the transition member 128. Spent coolant (coolant that has cooled the selected gas turbine component) can be circulated back to the cooling unit 150 for recycling or for use in other aspects of the gas turbine system. Details of the cooling unit 150 are discussed further with respect to FIG. 2.

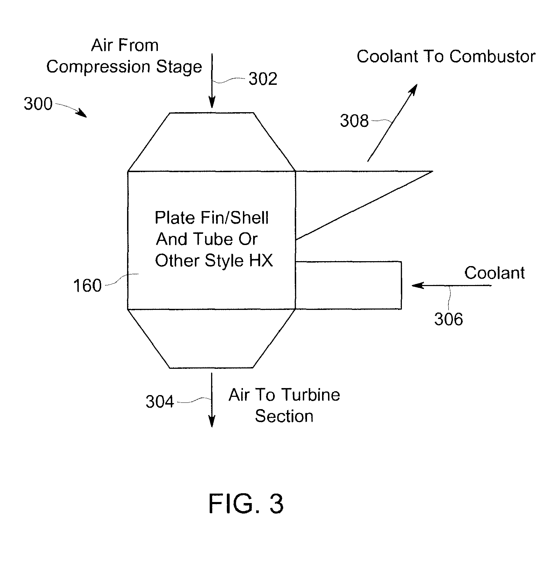

In one embodiment, a portion of the compressed air of the compression section 110 can be diverted from a selected compression stage via a bleed port 152 for cooling components of the turbine section 130. The diverted air travels through a pipe or conduit 158 to a heat exchanger 160. Heat is exchanged at the heat exchanger 160 between the diverted air and the exemplary coolant from cooling unit 150, after which, the cooled air 162 is delivered to a component at turbine section 130. Details of the heat exchanger 160 are discussed with respect to FIG. 3. The compressed air can be diverted from any stage of the compression section. Additionally, more than one conduit can be used to divert air from multiple compression stages and to deliver the cooled air to multiple turbine stages.

FIG. 2 shows an exemplary coolant preparation unit 200 for providing the exemplary coolant of the present disclosure for circulation to various components of the gas turbine system of FIG. 1. In an exemplary embodiment, the coolant preparation unit 200 receives a gas to be used as a coolant, compresses the received gas to obtain a coolant, adds moisture to the coolant and circulates the moisturized coolant to the exemplary gas turbine system of FIG. 1.

The received gas in various embodiments can be air, nitrogen gas, or a combination of air and nitrogen. Typically the received gas is received from an air separation unit of an IGCC (Integrated Gasification Combined Cycle) system typically used with gas turbine systems. The exemplary coolant preparation unit 200 includes a compressor 202 for compressing the received gas to be used as coolant, a moisturizing unit 204 for moisturizing the coolant and a heat exchanger 206. The moisturizing unit is configured to add moisture, typically in the form of steam, to the compressed coolant received from the compressor 202. In one embodiment, the steam is introduced into the compressed coolant by bubbling the compressed coolant through water. The compressed coolant moisturizing unit 204 is typically a heated water vessel through which the gaseous coolant is bubbled to pick up the water and converts the gaseous coolant into a mixture of coolant with water vapors and/or steam. This requires the water temperature to be lower than boiling temperature. As the water evaporates, the temperature of coolant is lowered as the coolant gives heat to the water for vaporization of the water. The level of coolant moisturization is typically less than 25%. Alternatively, steam can be added directly to the coolant to obtain higher levels of steam in the coolant. Adding moisture to the coolant increases the effectiveness of the coolant. For one, moisturizing the coolant lowers the temperature of the coolant compared to a dry coolant. The added moisture also increases the heat capacity of the coolant. Additionally, moisturizing the coolant increases the mass of the coolant, thereby increase its cooling efficiency. Therefore, an amount of moisturized coolant cools a selected component more than a same amount of dry coolant. Alternatively, less of the moisturized coolant can be used to cool the selected component than dry coolant.

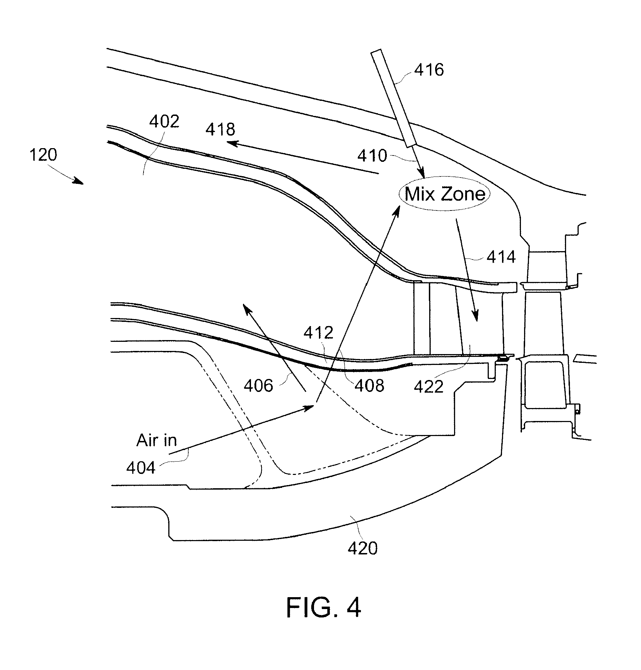

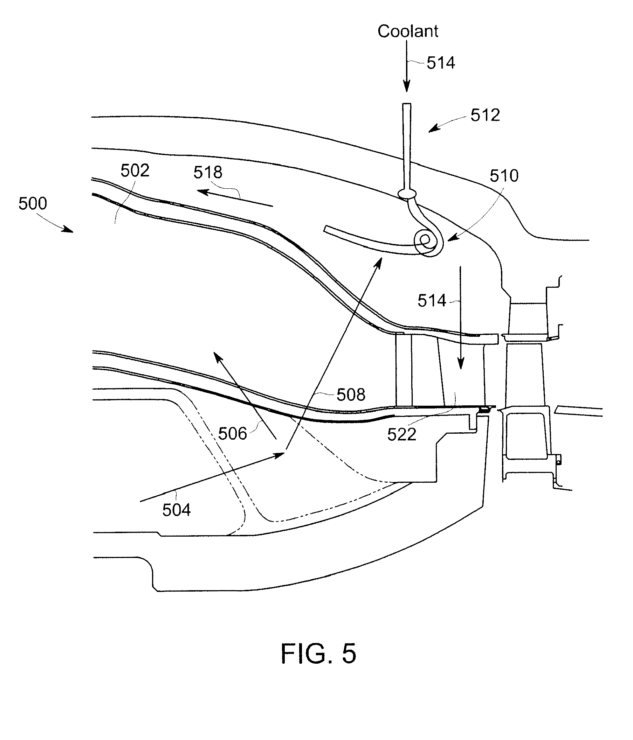

In an exemplary embodiment, the moisturized coolant is delivered to a selected component which can be a component of a combustion section 120 or of a turbine section 130, as shown in FIG. 1. Various details of cooling the combustion section 130 are illustrated in detail in FIGS. 4 and 5. Returning to FIG. 2, gas turbine air extractor 212 delivers exhaust gas from the exit 139 of the turbine section 130 to heat exchanger 206. Heat can be exchanged at heat exchanger 206 between the returning exhaust gas and the fresh moisturized compressed gas being circulated to the gas turbine system. The heat exchange therefore lowers the temperature of the returning exhaust gas.

Coolant preparation unit 200 further includes various low temperature heating devices 214 for providing heated water/steam to the moisturizing unit 204. The various heating devices 214 can include one or more of an air extraction low temperature heat exchanger 216, a syngas low temperature gas cooler 218 and an HRSG (Heat Recovery Steam Generator) low temperature economizer 220. The exemplary heating devices can receive water from the moisturizer that is below a boiling point of water. The exemplary heating devices 214 can also receive make up water from a reservoir or tank. The exemplary heating units heat the water to produce steam which is thereafter provided to moisturizing unit 204.

The exemplary Air Extraction Low Temperature Heat Exchanger receives returning extraction air cooled from the Heat Exchanger 206. Heat is exchanged with the return water/make up water and heated water/steam is generated. Gas output from the Heat Exchanger 206 can be delivered to an air separation unit 224 which in one embodiment provides the gas to compressor 202. A syngas low temperature gas cooler recovers heat from a raw syngas leaving a syngas gasifier. The syngas is cooled by exchanging heat with the return water and/or the make up water. Heated water/steam is produced in the process. HRSG low temp economizer 220 derives heat from a turbine section 210 exhaust gas to produce heated water and/or steam.

FIG. 3 shows a detailed view of the exemplary heat exchanger 160 of FIG. 1. Compressed air 302 is received at the heat exchanger 160 from a compressor stage of the compressor section 110 at a high temperature. In an exemplary embodiment, coolant 306 is received from coolant preparation unit 200 of FIG. 2. In this embodiment, the coolant received at the heat exchanger is therefore moisturized coolant. Heat exchange at the heat exchanger heats the coolant 306 and cools the compression stage extraction air 302. The cooled extraction air 304 then can be circulated to a component of the gas turbine system, typically a blade of the turbine section 130. The heated coolant 308 can be circulated to the compressed air chamber 124 to cool a component, which can be the combustor 126 or turbine nozzle 132. Typically the coolant 306 received at the heat exchanger 150 is at a temperature of about 350°F and the compression stage air 302 is at a temperature of about 700°F. After heat exchange at the heat exchanger, the air 304 circulated to turbine blades is typically in a temperature range from about 500° to about 600°F and the coolant circulated to the combustor section 120 is at a temperature of about 450°F. The heat exchanger 160 can be of any suitable type, including a plate fin heat exchanger, a shell and tube heat exchanger, etc. In alternate embodiments, the coolant can be received at the heat exchanger from the compressor discharge casing and can be circulated after heat exchange at heat exchanger 160 to the compressor discharge casing. In another embodiment, the heat exchanger 160 and the moisturizing unit 204 of FIG. 2 can be combined into a single unit to increase efficiency and reduce costs.

FIG. 4 shows a detailed view of an exemplary combustor section 150 of a gas turbine system in one embodiment of the present disclosure. The exemplary combustor section includes combustor 402 connected to compressor discharge casing (CDC) 412 and surrounded by a compressed air chamber 420. Compressed air 404 from a final stage of the compressor section into the compressed air chamber 420. A portion 406 of the received compressed air 404 is sent to the combustor 402 for combustion. Another portion 408 of the received compressed air 404 is circulated around within the compressed air chamber 420 for cooling purposes. Air 408 can be circulated to mix zone 410. The exemplary combustor section 120 includes a coolant nozzle 416 for delivering the compressed moisturized coolant from the coolant preparation unit 200 of FIG. 2 to mix zone 410 of the compressed air chamber 420. Air 408 mixes with the compressed moisturized coolant in the mix zone. In an exemplary embodiment, the air 408 is cooled to about 400°F upon mixing. A portion 414 of the air and moisturized coolant mixture can be circulated within the compressed air chamber 420 around the CDC 412 and in particular to turbine nozzle 422, which can include a first stage blade of the turbine section. Another portion 412 of the air and moisturized coolant can be circulated into the combustor 402 for combustion. In an exemplary embodiment, the air/coolant mixture 414 received at turbine nozzle 422 includes a high percentage of coolant. The air/coolant mixture 412 delivered to the combustor typically has a low percentage of coolant and therefore is hotter than the air/coolant mixture received at turbine nozzle 422. The air/coolant mixture delivered to the combustor is mixed with fuel and generally lowers a temperature of the working gas resulting from combustion of the fuel/air/coolant mixture. The fuel/air coolant mixture can reduce production of NOx in the gas turbine exhaust gas.

FIG. 5 shows a detailed view of a combustor section 500 having an alternate apparatus for cooling the combustor section. Compressed air 504 enters the combustor section from the final compression stage of the compressor section. A portion 506 of the compressed air is circulated to the combustor 502 for combustion and a portion 508 of the compressed air is circulated within the compressed air chamber 520 to cooling coil 510 which can be made of a thermally conductive material. The cooling coil 510 is at an end of a supply line 512 for delivering the exemplary moisturized coolant 514 of the present disclosure to the cooling coil 510. Heat can be exchanged between the moisturized coolant 514 and the air 508 through the conductive cooling coil 520 to cool the air 508. A portion 518 of the cooled air can be circulated to the combustor 502 for combustion. Another portion 514 of the cooled air can be circulated to turbine nozzle 522 to cool the turbine nozzle. The coil is configured to provide a majority of the cooling to air being directed toward the turbine nozzle 522, therefore providing a majority of the cooling to the turbine nozzle 522. Air 518 receiving a minority of the cooling at the cooling coil 510 is typically delivered to the combustor 502.

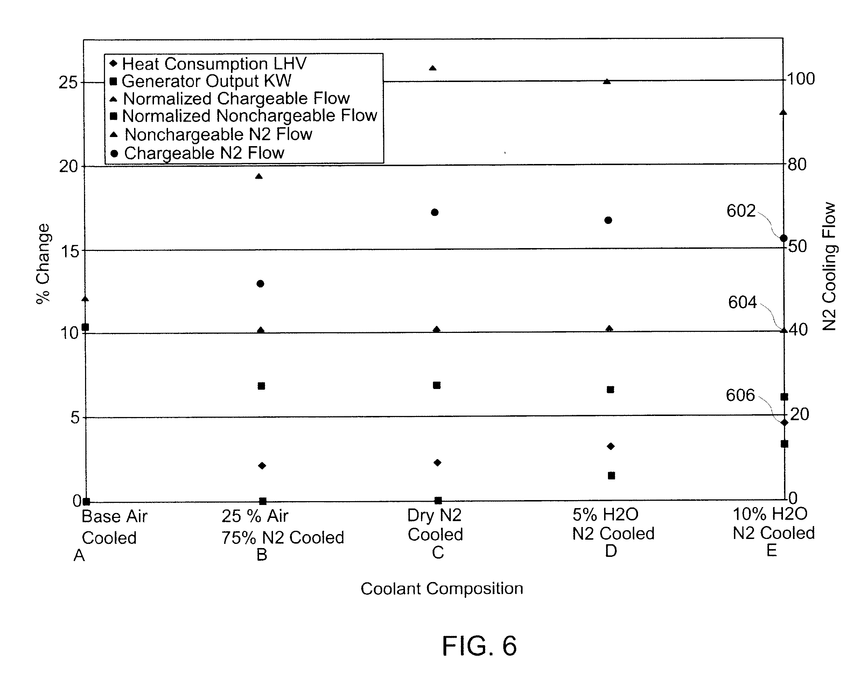

FIG. 6 shows a graph of gas turbine performance for various exemplary parameters of an exemplary gas turbine system. A listing of various coolant compositions is shown along the x-axis. The coolant compositions are (A) air cooling, (B) cooling with 25% air and 75% nitrogen, (C) cooling with dry nitrogen, (D) cooling with nitrogen with 5% steam, and (E) cooling with nitrogen with 10 % steam. Parameters for heat consumption, generator output, normalized chargeable flow, normalized nonchargeable flow, and nonchargeable nitrogen flow are shown in percentages as indicated at the y-axis on the left-hand side of the graph. The parameter for chargeable nitrogen flow is indicated as N2 cooling flow at the y-axis on the righthand side of the graph.

As seen on the graph, the chargeable nitrogen flow 602 decreases from a value of about 70% for composition C (dry cooled nitrogen) to about 65% for composition D (nitrogen moisturized at 5%) and to about 62% for composition E (nitrogen moisturized at 10%). Additionally, the percentage of normalized chargeable flow 604 decreases from about 40.5% for composition C to about 40% at composition E. The percentage of heat consumption 606 increases from about 10% for dry nitrogen to about 20% for nitrogen moisturized at 10%.

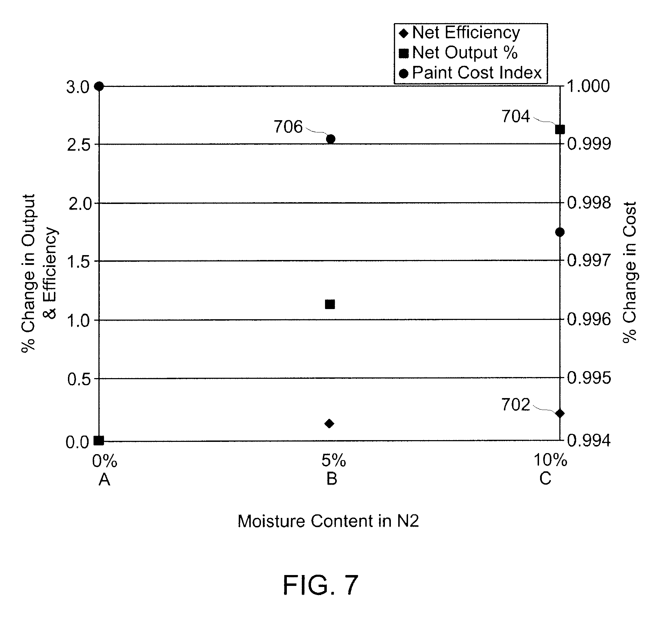

FIG. 7 shows a performance of an exemplary gas turbine system cooled using coolant having various levels of moisture content. In the exemplary graph of FIG. 7, the coolant is nitrogen. Parameters values are shown at three exemplary moisture content levels: zero percent moisturized nitrogen (dry nitrogen), 5% moisturized nitrogen and 10% moisturized nitrogen. Parameter values for net efficiency 702 and net output percentage 704 are indicated by the y-axis of the left-hand side of the graph, while parameter values for plant cost index 706 are indicated by the y-axis of the left-hand side of the graph. Column A (dry nitrogen) shows base reference values of these parameters. Column B (5% moisturized nitrogen) shows about 0.1% increase in net efficiency 702 of the gas turbine system versus dry nitrogen. Column C (10% moisturized nitrogen) shows about 0.25% increase in net efficiency versus dry nitrogen. Column B shows about 1.2% increase in net output 704 versus dry nitrogen and Column C shows an increase of about 2.5% in net output versus dry nitrogen. Column B shows that plant cost index 706 decreases to about 99.9% of the cost vs. when dry nitrogen is used. Column C shows that plant cost index decreases to about 99.75% of the cost vs. when dry nitrogen is used, meaning about a 0.25% decrease in cost.

Therefore, in one aspect, the present disclosure provides a method of controlling a temperature of a component of a gas turbine, including: obtaining a compressed gas for use as a coolant; moisturizing the coolant; and circulating the moisturized coolant to the component of the gas turbine to control the temperature of the component. The compressed coolant gas can be moisturized by bubbling the coolant through at least one of (i) heated water; and (ii) steam. The steam can be provided from a water heating devices that can be an air extraction low temperature heat exchanger, a syngas low temperature gas cooler, and/or a heat recovery steam generator. Once moisturized, the moisturized coolant includes from about 0% to about 10% steam by volume. In one embodiment, the method further includes mixing the moisturized coolant with compressor air obtained from a compressor unit of the gas turbine and circulating the mixture of the moisturized coolant and compressor air to the gas turbine component to control the temperature of the component. In one embodiment, the moisturizing of the coolant and the exchange of heat between the moisturized coolant and compressor air obtained from the compressor section occurs at a single unit. In another embodiment, the method further includes exchanging heat across a thermal conductor between the moisturized compressed coolant and compressor air obtained from a compressor section of gas turbine to cool the compressor air and circulating the cooled compressor air to the gas turbine component to control the temperature of the component. The coolant can be one of (i) air; (ii) nitrogen (N₂); and (iii) a mixture of air and nitrogen. Also, the coolant can be obtained from an air separation unit of an integrated gasification combined cycle (IGCC) system associated with the gas turbine. In various embodiments, the component of the gas turbine includes at least one of: (i) a blade of a turbine section of the gas turbine; (ii) a turbine nozzle; and (iii) a combustor. Additionally, the moisturized compressed coolant can be mixed with fuel and the coolant/fuel mixture can be combusted to reduce a NOx emission of the gas turbine.

In another aspect, the present disclosure provides an apparatus for controlling a temperature a component of a gas turbine, including: a unit configured to provide a compressed gas for use as a coolant; a moisturizing unit configured to add moisture to the coolant; and a circulating unit configured to circulate the moisturized coolant to the component of the gas turbine to control the temperature of the component. The moisturizer can be configured to moisturize the coolant by bubbling the coolant through at least one of (i) heated water; and (ii) steam. The steam can be received from a water heating device, wherein the water heating device can be at least one of: an air extraction low temperature heat exchanger; a syngas low temperature gas cooler; and a heat recovery steam generator. The moisturizing unit can be configured to add moisture to the coolant in a range from about 0% steam to about 10% steam by volume. In one embodiment, an inlet to a combustor section of the gas turbine delivers the moisturized coolant to mix with compressor air obtained from a compressor section of the gas turbine system, wherein the mixture is circulated to the component of the gas turbine to control the temperature of the component. In another embodiment, a thermally conductive material is configured to exchange heat between the moisturized coolant and compressor air obtained from a compressor section to cool the compressor air, wherein the cooled compressor air is circulated to the component of the gas turbine to control the temperature of the component. In one embodiment, the moisturizing unit can include the thermally conductive material for exchanging heat between the moisturized coolant and the compressor air. The coolant can be air, nitrogen, and a mixture of air and nitrogen in various embodiments. An integrated gasification combined cycle (IGCC) system can be configured to provide the coolant to the moisturizer. The component of the turbine can be a blade of a turbine section of the gas turbine, a turbine nozzle and a combustor, for example. A combustor can be configured to combust a mixture of fuel and the moisturized compressed coolant gas to reduce a NOx emission of the gas turbine.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention can include only some of the described embodiments. Accordingly, the invention is not to be seen as limited by the foregoing description, but is only limited by the scope of the appended claims.

Various aspects and embodiments of the present invention are defined by the following numbered clauses:
1. An apparatus for controlling a temperature a component of a gas turbine, comprising:
   a unit configured to provide a compressed gas for use as a coolant;
   a moisturizing unit configured to add moisture to the coolant; and
   a circulating unit configured to circulate the moisturized coolant to the component of the gas turbine to control the temperature of the component.
2. The apparatus of clause 1, wherein the moisturizing unit is configured to moisturize the coolant by bubbling the coolant through at least one of (i) heated water; and (ii) steam.
3. The apparatus of clause 2, wherein the moisturizing unit receives the steam from at least one of: (i) an air extraction low temperature heat exchanger; (ii) a syngas low temperature gas cooler; and (iii) a heat recovery steam generator.
4. The apparatus of clause 1, wherein the moisturizing unit is further configured to add moisture to the coolant in a range from about 0% steam to about 10% steam by volume.
5. The apparatus of clause 1, further comprising an inlet to a combustor section of the gas turbine configured to deliver the moisturized coolant to mix with compressor air obtained from a compressor section of the gas turbine, wherein the mixture is circulated to the component of the gas turbine to control the temperature of the component.
6. The apparatus of clause 1 further comprising a thermally conductive material configured to exchange heat between the moisturized coolant and compressor air obtained from a compressor section to cool the compressor air, wherein the cooled compressor air is circulated to the component of the gas turbine to control the temperature of the component.
7. The apparatus of clause 6, wherein the moisturizing unit includes the thermally conductive material for exchanging heat between the moisturized coolant and the compressor air.
8. The apparatus of clause 1, wherein the coolant is one of (i) air; (ii) nitrogen (N₂); and (iii) a mixture of air and nitrogen.
9. The apparatus of clause 1, further comprising an integrated gasification combined cycle (IGCC) system configured to provide the coolant.
10. The apparatus of clause 1, wherein the component of the turbine further comprises at least one of: (i) a blade of a turbine section of the gas turbine; (ii) a turbine nozzle; and (iii) a combustor.
11. The apparatus of clause 1, further comprising a combustor configured to combust a mixture of fuel and the moisturized coolant gas to reduce a NOx emission of the gas turbine.

## Claims

1. A method of controlling a temperature of a component of a gas turbine (100), comprising:
obtaining a compressed gas for use as a coolant (306);
moisturizing the coolant (306); and
circulating the moisturized coolant (308) to the component of the gas turbine (110) to control the temperature of the component.

2. The method of claim 1, wherein moisturizing the coolant (306) further comprises bubbling the compressed coolant (306) through at least one of (i) heated water; and (ii) steam.

3. The method of claim 2, further comprising providing the steam from at least one of: (i) an air extraction low temperature heat exchanger (216); (ii) a syngas low temperature gas cooler (218); and (iii) a heat recovery steam generator (220).

4. The method of any of claims 1 to 3, wherein the moisturized coolant (308) includes from about 0% to about 10% steam by volume.

5. The method of any of claims 1 to 4, further comprising mixing the moisturized coolant (308) with compressor air (302) obtained from a compressor unit (202) of the gas turbine (100) and circulating the mixture of the moisturized coolant (308) and compressor air (302) to the gas turbine component to control the temperature of the component.

6. The method of any of claims 1 to 5, further comprising exchanging heat across a thermal conductor between the moisturized coolant (308) and compressor air obtained from a compressor section (110) of gas turbine (100) to cool the compressor air (302) and circulating the cooled compressor air (304) to the gas turbine component to control the temperature of the component.

7. The method of claim 6, wherein the moisturizing of the coolant (306) and the exchange of heat between the moisturized coolant (308) and compressor air (302) obtained from the compressor section occurs (110) at a single unit.

8. The method of any preceding claim, wherein the coolant (306) is one of (i) air; (ii) nitrogen (N₂); and (iii) a mixture of air and nitrogen.

9. The method of any preceding claim, further comprising obtaining the coolant (306) from an air separation unit (224) of an integrated gasification combined cycle (IGCC) system associated with the gas turbine.

10. The method of any preceding claim, wherein the component of the gas turbine further comprises at least one of: (i) a blade (136) of a turbine section (210) of the gas turbine (100); (ii) a turbine nozzle (132); and (iii) a combustor (402).

11. The method of any preceding claim, further comprising mixing the moisturized coolant (308) with fuel and combusting the mixture to reduce a NOx emission of the gas turbine (100).

12. An apparatus for controlling a temperature a component of a gas turbine (100), comprising:
a unit (200,202) configured to provide a compressed gas for use as a coolant (306);
a moisturizing unit (204) configured to add moisture to the coolant (306); and
a circulating unit (214) configured to circulate the moisturized coolant (308) to the component of the gas turbine (100) to control the temperature of the component.

13. The apparatus of claim 12, wherein the moisturizing unit (204) is configured to moisturize the coolant (306) by bubbling the coolant through at least one of (i) heated water; and (ii) steam.

14. The apparatus of claim 13, wherein the moisturizing unit (204) receives the steam from at least one of: (i) an air extraction low temperature heat exchanger (216); (ii) a syngas low temperature gas cooler (218); and (iii) a heat recovery steam generator (220).

15. The apparatus of any of claims 12 to 14, wherein the moisturizing unit (202) is further configured to add moisture to the coolant (306) in a range from about 0% steam to about 10% steam by volume.
